# EUROPÄISCHE PATENTSCHRIFT

(11) **EP 3 327 848 B1**
(45) Veröffentlichungstag und Bekanntmachung des Hinweises auf die Patenterteilung: **04.03.2020**
(21) Anmeldenummer: 17203303.7
(22) Anmeldetag: 23.11.2017
(51) Int. Cl.: H01M 8/1213, H01M 8/1226, H01M 4/86, H01M 4/88, H01M 8/1231, H01M 8/0232, H01M 8/124

(54) **VERFAHREN ZUR HERSTELLUNG EINER FESTOXIDBRENNSTOFFZELLE**
METHOD OF MANUFACTURING A SOLID OXIDE FUEL CELL
MÉTHODE DE FABRICATION D'UNE PILE À COMBUSTIBLE

(30) Priorität: 28.11.2016 DE 102016122888
(43) Veröffentlichungstag der Anmeldung: 30.05.2018
(73) Patentinhaber: Technische Universität Clausthal, 38678 Clausthal-Zellerfeld (DE)
(72) Erfinder: Hamje, Dr. Jens, 38678 Clausthal-Zellerfeld (DE); Wesling, Prof. Dr. Volker, 38678 Clausthal-Zellerfeld (DE); Treutler, Kai, 21720 Grünendeich (DE)
(74) Vertreter: Gramm, Lins & Partner Patent- und Rechtsanwälte PartGmbB

(56) Entgegenhaltungen:
- EP-A1- 2 044 641
- EP-A1- 3 089 250
- DE-A1- 10 302 122
- DE-T2- 69 917 468
- JP-A- H05 174 832
- KR-A- 20120 075 257
- US-A1- 2007 134 543
- US-B1- 6 228 521

## Beschreibung

Die Erfindung betrifft ein Verfahren zur Herstellung einer Festoxidbrennstoffzelle gemäß Anspruch 1.

Brennstoffzellen dienen, ähnlich wie Batterien, der direkten Umwandlung von chemischer Energie in elektrische Energie. Das Kernstück einer Brennstoffzelle ist die Membranelektrodeneinheit oder Membranelektrodenanordnung (MEA, Membrane Electrode Assembly), die aus einer Anodenschicht, einer Kathodenschicht sowie einer die Anodenschicht von der Kathodenschicht trennende Elektrolytmembran besteht. Zur Stromerzeugung wird der Anodenschicht Brenngas, beispielsweise Wasserstoff, zugeführt, während der Kathodenschicht Oxidationsgas, beispielsweise Luft, zugeführt wird. Dabei kommt es zu einer Oxidation von Brenngas an der Anodenschicht, wobei die vom Brenngas abgegebenen Elektronen über eine elektrisch leitende Verbindung von der Anodenschicht zur Kathodenschicht wandern, wo sie das Oxidationsgas reduzieren. Die dabei entstehenden negativen Oxidationsgasionen kombinieren mit den positiv geladenen Brenngasionen. Wird beispielsweise als Brenngas Wasserstoff (H₂) und als Oxidationsgas Sauerstoff (O₂) verwendet, so kombinieren im Falle einer Festoxidbrennstoffzelle (SOFC, Solid Oxide Fuel Cell) Sauerstoffionen O²⁻ in und an der Anodenschicht mit Wasserstoffionen H⁺ zu Wassermolekülen H₂O. Die dabei freigesetzte Energie kann genutzt werden, indem zwischen die Anode und die Kathode eine Verbraucherlast geschaltet wird.

Da eine einzelne Brennstoffzelle nur eine geringe elektrische Spannung (typischerweise zwischen 0.1 V und 1 V) zur Verfügung stellt, ist es üblich, viele Brennstoffzellen in Form eines Brennstoffzellenstapels (Brennstoffzellenstack) elektrisch hintereinander zu schalten, so dass sich die Spannungen der einzelnen Brennstoffzellen des Stapels addieren. Dabei wird jeweils die Kathodenschicht einer Brennstoffzelle mit der Anodenschicht der angrenzenden Brennstoffzelle über eine Bipolarplatte verbunden. Die Bipolarplatte trennt dabei einen Strömungsbereich des Brenngases von einem Strömungsbereich des Oxidationsgases.

Bei einer Festoxidbrennstoffzelle ist die Elektrolytmembran aus einem festen Werkstoff gebildet, z.B. einem keramischen Werkstoff, der in der Lage ist, Sauerstoffionen zu leiten, für Elektronen dennoch isolierend zu wirken. Festoxidbrennstoffzellen gelten als Hochtemperatur-Brennstoffzellen, die bei einer Betriebstemperatur von z.B. 650°C bis 1000°C betrieben werden.

Es gibt ferner bereits Vorschläge für metallschaumgestützte Festoxidbrennstoffzellen (MFS-SOFC: Metal Foam Supported SOFC), z.B. in der Veröffentlichung "Metal supported SOFC on the gradient permeable metal foam substrate", Advanced Materials Research Vols. 123-125 (2010), Seiten 1083-1086.

Aus der DE 103 02 122 A1 ist ein Dichtungsaufbau für eine Brennstoffzelle bzw. einen Elektrolyseur sowie ein Verfahren zu dessen Herstellung und Brennstoffzelle bzw. Elektrolyseur aufweisend den Dichtungsaufbau bekannt. Aus der US 6,228,521 B1 ist eine Hochleistungs-Festoxidbrennstoffzelle mit abgestufter Anode bekannt. Aus der US 2007/0134543 A1 ist eine abgestuft gradierte Brennstoffelektrode und ein Verfahren zu deren Herstellung bekannt. Aus der WO 2007/093759 A1 ist eine Festoxidbrennstoffzelle mit einer mehrlagigen Anode bekannt. Aus der DE 69917468 T2 ist ein alternativer Elektrodenträger und Gasverteiler zur Verwendung in Brennstoffzellen mit geschmolzenen Karbonaten bekannt. Aus der EP 3 089 250 A1 ist ein Kathodenstromkollektor für eine Festoxidbrennstoffzelle und eine damit ausgestattete Festoxidbrennstoffzelle bekannt. KR 20120075257 A offenbart eine Brennstoffzelle, deren Elektroden auf einer Metallschaumschicht angeordnet sind.

Der Erfindung liegt die Aufgabe zugrunde, solche MFS-SOFC hinsichtlich der Herstellung und der Anwendungsfunktionalität zu verbessern.
Diese Aufgabe wird einem Verfahren gemäß Anspruch 1 gelöst.

Die Festoxidbrennstoffzelle weist wenigstens folgende Merkmale auf:
a) eine mechanische Stützstruktur aus einem offenporigen Metallschaummaterial,
b) eine auf der Oberfläche des Metallschaummaterials der Stützstruktur aufgebrachte, in das Metallschaummaterial im Wesentlichen nicht eindringende und darauf gasdicht aufgebrachte Anodenschicht der MEA,
c) eine Elektrolytmembran der MEA aus einem Festoxidmaterial,
d) eine Kathodenschicht der MEA.

Die Erfindung hat den Vorteil, dass die erfindungsgemäß hergestellte Brennstoffzelle bei vergleichsweise geringen Betriebstemperaturen betrieben werden kann, z.B. unterhalb von 600°C. Ein weiterer Vorteil ist, dass die Festoxidbrennstoffzelle schneller betriebsbereit ist, da sie schneller "hochgefahren" werden kann. Dies ist möglich, weil bei der Brennstoffzelle kaum oder zumindest wesentlich weniger mechanische Spannungen beim Hochfahren auftreten, die sich aus unterschiedlichen Wärmeausdehnungskoeffizienten der aneinander angrenzenden Materialien ergeben, z.B. des Metallschaummaterials und des Anodenschicht-Materials. Ein weiterer Vorteil ist, dass die erfindungsgemäß hergestellte Brennstoffzelle eine verbesserte Dauerhaltbarkeit und somit Lebensdauer aufweist, insbesondere eine erhöhte Anzahl von möglichen An- und Abschaltvorgängen (Temperaturzyklen).

Ferner lässt sich bei der erfindungsgemäß hergestellten Brennstoffzelle eine deutlich größere Dreiphasengrenze im Bereich der Schichten der MEA realisieren, was wiederum zu einer deutlich erhöhten Stromausbeute und Leistungsdichte im Vergleich zu konventionellen Brennstoffzellen führt.

Die Festoxidbrennstoffzelle kann z.B. eine Brenngaskammer aufweisen oder mit einer Brenngaskammer gekoppelt sein. Die Brenngaskammer ist dann in fluidischer Verbindung mit der Anodenschicht der MEA, sodass der Anodenschicht ein Brenngas zugeführt werden kann. Die Festoxidbrennstoffzelle kann ferner eine Luftkammer oder mit einer Luftkammer gekoppelt sein. Die Luftkammer ist dann in fluidischer Verbindung mit der Kathodenschicht der MEA. Auf diese Weise kann der Kathodenschicht Luft oder ein anderes sauerstoffhaltiges Gas oder Sauerstoff zugeführt werden. Die Anodenschicht kann insbesondere derart ausgebildet sein, dass sie gar nicht in das Metallschaummaterial eindringt.

Gemäß einer vorteilhaften Weiterbildung der Erfindung ist vorgesehen, dass sich das Festoxidmaterial der Elektrolytmembran in einer zur Stützstruktur hin verringernden Konzentration in die Anodenschicht hinein erstreckt. Auf diese Weise können die Grenzflächen zwischen der Anodenschicht und der Elektrolytmembran vergrößert werden (Vergrößerung der Dreiphasengrenze), was die erwähnte erhöhte Stromausbeute und Leistungsdichte unterstützt. Das Festoxidmaterial der Elektrolytmembran erstreckt sich dabei bis hin zur Außenseite der Anodenschicht hin, d.h. bis zur Grenzfläche, an der die Anodenschicht an die mechanische Stützstruktur angrenzt.

Gemäß einer vorteilhaften Weiterbildung der Erfindung ist vorgesehen, dass sich das Festoxidmaterial der Elektrolytmembran mit einer von der Stützstruktur fort verringernden Konzentration in die Kathodenschicht der MEA hinein erstreckt. Auf diese Weise kann die Grenzfläche zwischen der Elektrolytmembran und der Kathodenschicht vergrößert werden (Vergrößerung der Dreiphasengrenze), was die erwähnte erhöhte Stromausbeute und Leistungsdichte unterstützt. Das Festoxidmaterial der Elektrolytmembran kann sich dabei bis hin zur Außenseite der Kathodenschicht hin erstrecken, d.h. bis zur Grenzfläche, an der die Kathodenschicht an eine weitere mechanische Stützstruktur angrenzt oder mit der Luftkammer verbunden ist. Die Vergrößerung der Grenzfläche auf der Kathodenschicht-Seite kann ferner durch einen porösen Schichtaufbau der MEA unterstützt werden.

Gemäß einer vorteilhaften Weiterbildung der Erfindung ist vorgesehen, dass eine Brenngaskammer der Festoxidbrennstoffzelle zumindest teilweise durch die mechanische Stützstruktur aus dem offenporigen Metallschaummaterial gebildet ist oder durch diese Stützstruktur mit der Anodenschicht verbunden ist. Dies hat den Vorteil, dass die Brennstoffzelle vom Aufbau her kompakt gehalten werden kann, da das Metallschaummaterial der mechanischen Stützstruktur zumindest teilweise zugleich als Brenngaskammer dienen kann.

Gemäß der Erfindung ist vorgesehen, dass auf der Außenseite der Kathodenschicht eine weitere mechanische Stützstruktur aus einem offenporigen Metallschaummaterial angeordnet ist. Auf diese Weise wird eine mechanisch besonders robuste Brennstoffzelle realisiert, die hohen äußeren Belastungen standhalten kann, insbesondere Vibrationsbelastungen. Die weitere mechanische Stützstruktur aus dem offenporigen Schaummaterial kann zumindest einen Teil der Luftkammer bilden. Auch dies unterstützt den kompakten Aufbau der Brennstoffzelle.

Gemäß einer vorteilhaften Weiterbildung der Erfindung ist vorgesehen, dass die MEA ohne gesinterte Materialbereiche gebildet ist. Auf diese Weise kann eine MEA mit hoher Materialhomogenität realisiert werden, die weitgehend unempfindlich gegenüber mechanischen Vibrationen ist und eine hocheffiziente elektrische Funktionalität aufweist. Die MEA kann z.B. mittels Gasphasenabscheidung hergestellt werden, wie nachfolgend noch näher erläutert wird.

Gemäß einer vorteilhaften Weiterbildung der Erfindung ist vorgesehen, dass die MEA entlang seitlicher Grenzflächen der mechanischen Stützstruktur verläuft. Auf diese Weise kann die Brennstoffzelle einfacher und robuster hergestellt werden, da die abzudichtenden Verbindungen bzw. Grenzflächen reduziert werden können, z.B. um 33 %. Dementsprechend treten bei der erfindungsgemäßen Brennstoffzelle Dichtigkeitsprobleme und damit verbundene Funktionsverschlechterungen mit geringerer Wahrscheinlichkeit auf.

Die Festoxidbrennstoffzelle kann in Draufsicht eine insgesamt runde Querschnittsform oder zumindest eine Querschnittsform mit abgerundeten Ecken aufweisen. Auf diese Weise wird die mechanische Robustheit und Dauerhaltbarkeit der Brennstoffzelle weiter verbessert.

Das Metallschaummaterial kann z.B. ein Nickelschaum sein. Die Anodenschicht kann z.B. durch Yttrium, Zirkon, Nickel oder eine Mischung daraus gebildet sein, z.B. durch YSZ. Es kann auch eine Legierung mit einem der zuvor genannten Metalle sein, z.B. Nickel-Aluminium. Zur Bildung der Elektrolytmembran kann Yttrium und/oder Zirkon genutzt werden. Für die Kathodenschicht kann z.B. Platin und/oder LSM genutzt werden.

Das erfindungsgemäße Verfahren beinhaltet zumindest die folgenden Schritte:
a) Bereitstellen der mechanischen Stützstruktur aus dem offenporigen Metallschaummaterial,
b) Erzeugen einer in das Metallschaummaterial im Wesentlichen nicht eindringenden und darauf gasdicht aufgebrachten Anodenschicht einer MEA der Festoxidbrennstoffzelle,
c) Fertigstellen der MEA mit einer Elektrolytmembran und einer Kathodenschicht.

Auf diese Weise kann insbesondere eine Festoxidbrennstoffzelle der zuvor erläuterten Art hergestellt werden.

Gemäß der Erfindung ist vorgesehen, dass die mechanische Stützstruktur vor dem Aufbringen der Anodenschicht mit einem die Poren des offenporigen Metallschaummaterials der Stützstruktur ausfüllenden, aushärtbaren Infiltrationsmaterial infiltriert wird. Dies hat den Vorteil, dass mittels des Infiltrationsmaterials das offenporige Metallschaummaterial zumindest temporär geschlossen werden kann, d.h. die Poren werden ausgefüllt, sodass auf diese Weise verhindert werden kann, dass das darauf aufgebrachte Material der Anodenschicht in das Metallschaummaterial eindringt. Die mit der Anodenschicht zu beschichtende Oberfläche der mit dem Infiltrationsmaterial ausgefüllten mechanischen Stützstruktur wird vor dem Aufbringen der Anodenschicht geglättet, z.B. durch Anschleifen und/oder Polieren. Das Anschleifen und/oder Polieren erfolgt soweit, dass der Metallschaum erreicht ist. Auf diese Weise kann besonders effektiv verhindert werden, dass Material der MEA, insbesondere der Elektrolytmembran, in das Metallschaummaterial der Stützstruktur eindringt. Das Infiltrationsmaterial kann z.B. ein Polymer sein, das über einen Härter aushärtbar ist.

Gemäß einer vorteilhaften Weiterbildung der Erfindung ist vorgesehen, dass das Infiltrationsmaterial nach Fertigstellen der MEA oder zumindest der Anodenschicht aus der Stützstruktur wieder entfernt wird. Das Entfernen des Infiltrationsmaterials kann z.B. durch thermische und/oder chemische Einflussnahme erfolgen. So kann z.B. ein Infiltrationsmaterial mit vergleichsweise niedrigem Schmelzpunkt durch Erwärmung in den flüssigen und/oder gasförmigen Zustand überführt werden, sodass es auf diese Weise aus der Stützstruktur entfernt werden kann. Das chemische Entfernen des Infiltrationsmaterials kann z.B. durch Einbringen eines Lösemittels, z.B. Aceton, durchgeführt werden. Auf diese Weise wird das Infiltrationsmaterial aufgelöst und mit dem Lösemittel aus der Stützstruktur entfernt.

Gemäß einer vorteilhaften Weiterbildung der Erfindung ist vorgesehen, dass die Anodenschicht, die Elektrolytmembran und/oder die Kathodenschicht der MEA mittels Gasphasenabscheidung hergestellt werden. Auf diese Weise kann die MEA mit den erwähnten drei Schichten auf einfache, schnelle und kostengünstige Weise hergestellt werden. Ein weiterer Vorteil ist, dass mittels der Gasphasenabscheidung, z.B. in einem Koverdampfungsprozess, die erwähnten Übergänge des Festoxidmaterials der Elektrolytmembran in die Anodenschicht und/oder in die Kathodenschicht realisiert werden können. Dies kann z.B. dadurch erfolgen, dass in dem Gasphasenabscheidungsprozess zunächst das Anodenschicht-Material mit hoher Konzentration verdampft wird, sodann wird das Festoxidmaterial der Elektrolytmembran mit ansteigender Konzentration hinzugegeben, wobei die Abscheidung des Anodenschicht-Materials reduziert wird. Schließlich wird zu einem späteren Zeitpunkt die Abscheiderate des Festoxidmaterials reduziert, während zugleich die Abscheiderate des Kathodenschicht-Materials erhöht wird.

Für die Gasphasenabscheidung können bekannte Prozesse der chemischen Gasphasenabscheidung (CVD - chemical vapor deposition) oder der physikalischen Gasphasenabscheidung (PVD - physical vapor deposition) eingesetzt werden. Die Kathodenschicht kann alternativ durch andere Verfahren, wie z.B. thermisches Spritzen, aufgebracht werden.

Gemäß einer vorteilhaften Weiterbildung der Erfindung ist vorgesehen, dass die mechanische Stützstruktur an gegenüberliegenden äußeren Oberflächenseiten mit jeweils einer separaten Anodenschicht beschichtet wird. Auf diese Weise kann diese mechanische Stützstruktur eine gemeinsame Stützstruktur für zwei benachbarte Brennstoffzellen eines Brennstoffzellenstapels, der in der erwähnten Janus-Anordnung realisiert ist, bilden. Auf diese Weise kann ein derartiger Brennstoffzellenstapel besonders einfach und kostengünstig hergestellt werden.

Die Erfindung wird nachfolgend anhand von Ausführungsbeispielen unter Verwendung von Zeichnungen näher erläutert. Es zeigen
- Figur 1: eine Festoxidbrennstoffzelle in Schnittdarstellung und
- Figur 2: eine Ausschnittsvergrößerung aus Figur 1 sowie ein Diagramm der Materialkonzentrationen in der MEA und
- Figur 3: einen Brennstoffzellenstapel in Schnittdarstellung und
- Figur 4: eine weitere Ausführungsform einer Festoxidbrennstoffzelle in Schnittdarstellung und
- Figur 5: eine weitere Ausführungsform eines Brennstoffzellenstapels in Schnittdarstellung.

In den Figuren werden gleiche Bezugszeichen für einander entsprechende Elemente verwendet.

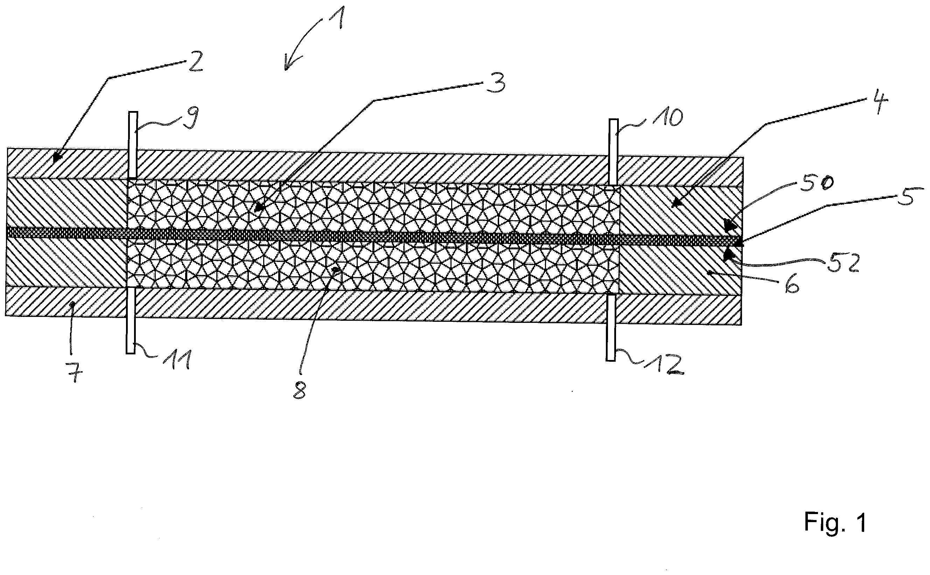

Die in der Figur 1 dargestellte Festoxidbrennstoffzelle 1 weist eine MEA 5 auf. Oberhalb der MEA 5, an einer Anodenschicht 50 der MEA 5, ist eine mechanische Stützstruktur 3 aus offenporigem Metallschaummaterial angeordnet. Auf der gegenüberliegenden Seite der MEA, an einer Kathodenschicht 52, ist eine weitere mechanische Stützstruktur 8 aus offenporigem Metallschaummaterial angeordnet. Die Stützstruktur 3 ist umfangsseitig durch einen Rahmen 4 eingefasst. Die weitere Stützstruktur 8 ist umfangsseitig durch einen weiteren Rahmen 6 eingefasst. Die MEA 5 erstreckt sich dabei durch die Rahmen 4, 6 bis zu einer Außenseite der Brennstoffzelle 1. Auf diese Weise kann eine elektrische Kontaktierung der MEA 5 an der Außenseite der Brennstoffzelle 1 erfolgen.

Die Stützstruktur 3 sowie der die Stützstruktur 3 umfassende Rahmen 4 ist an der Oberseite der Brennstoffzelle 1 durch eine obere Deckplatte 2 abgedeckt. Die weitere Stützstruktur 8 sowie der die weitere Stützstruktur umgebende Rahmen 6 ist an der Unterseite der Brennstoffzelle 1 durch eine untere Deckplatte 7 abgedeckt. Die Brennstoffzelle 1 kann Zuführleitungen und Abführleitungen 9, 10, 11, 12 für das Brenngas und ein Sauerstoff enthaltendes Gas aufweisen. So kann z.B. das Brenngas durch die Zuführleitung 9 zugeführt werden und durch die Abführleitung 10 überschüssiges Brenngas und das bei der Reaktion entstandene Wasser abgeführt werden. Durch die Zuführleitung 11 kann z.B. Luft zugeführt werden und über die Abführleitung 12 die verbrauchte Luft abgeführt werden.

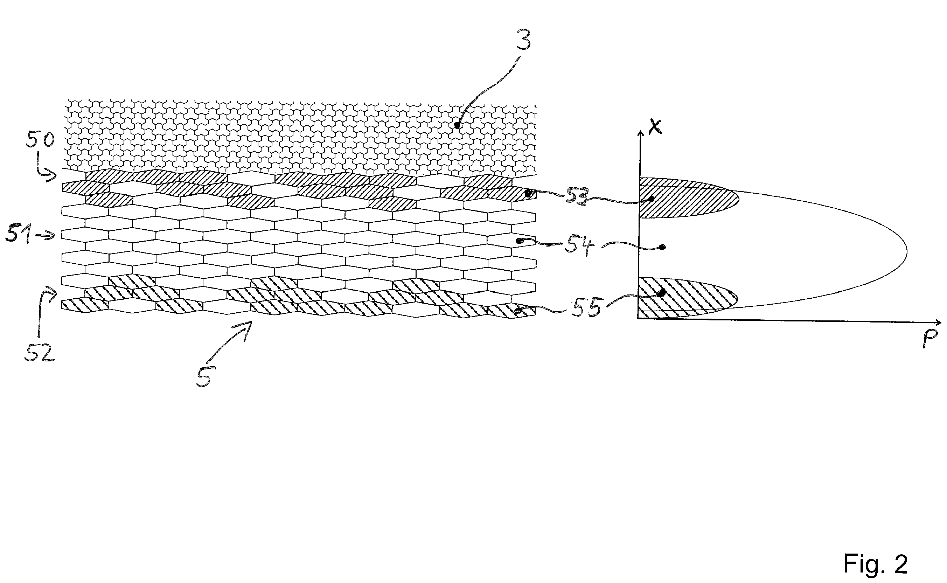

Die Figur 2 zeigt im linken Teil der Abbildung einen vergrößerten Ausschnitt der MEA 5 mit einem Teilausschnitt der darüber angeordneten Stützstruktur 3. Im rechten Teil der Abbildung ist die jeweilige Konzentration p des Anodenschicht-Materials 53, des Festoxidmaterials 54 der Elektrolytmembran sowie des Kathodenschicht-Materials 55 über eine räumliche Koordinate x, die durch die MEA verläuft, aufgetragen. Erkennbar ist, dass im mittleren Teil der MEA 5, wo die Elektrolytmembran 51 ausgebildet ist, ausschließlich Festoxidmaterial 54 vorhanden ist. Im oberen Randbereich, wo die Anodenschicht 50 ausgebildet ist, ist ein Übergang zwischen dem Festoxidmaterial 54 und dem Anodenschicht-Material 53 vorhanden. Im unteren Bereich, wo die Kathodenschicht 52 ausgebildet ist, ist ein Übergang zwischen dem Festoxidmaterial 54 und dem Kathodenschicht-Material 55 vorhanden. Dies lässt sich z.B. durch Gasphasenabscheidung in einfacher Weise herstellen.

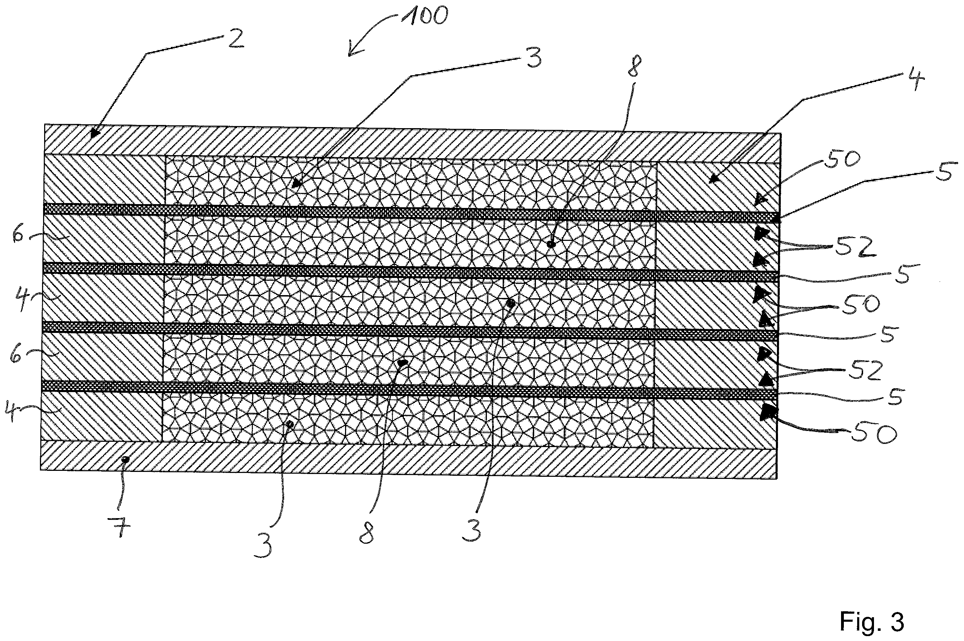

Die Figur 3 zeigt einen Brennstoffzellenstapel 100, der aus Festoxidbrennstoffzellen der anhand der Figur 1 erläuterten Art aufgebaut ist, wobei die einzelnen Brennstoffzellen derart angeordnet sind, dass benachbarte Brennstoffzellen mit ihrer jeweiligen Anodenseite der MEA oder mit ihrer jeweiligen Kathodenseite der MEA einander zuweisend angeordnet sind, wie durch die in Figur 3 wiedergegebenen Bezugszeichen verdeutlich wird. Dementsprechend vereinfacht sich der gesamte Aufbau, da bei benachbarten Brennstoffzellen nicht jeweils zweimal die Stützstruktur 3 oder 8 vorhanden sein muss, sondern nur einmal erforderlich ist. Ferner ist es ausreichend, wenn eine obere Deckplatte 2 für den gesamten Brennstoffzellenstapel 100 vorhanden ist, und entsprechend auch nur eine untere Deckplatte 7.

Die Zuführungsleitungen und Abführungsleitungen 9, 10, 11, 12 können bei dem in Figur 3 dargestellten Brennstoffzellenstapel z.B. seitlich durch die Rahmen 4, 6 geführt sein. Es kann z.B. die Zuführleitung 9 von links durch den Rahmen 4 eingeführt sein und die Abführleitung 10 nach rechts durch den Rahmen 4 herausgeführt sein. Die Zuführleitung 11 kann von links durch den Rahmen 6 eingeführt sein und nach rechts durch den Rahmen 6 die Abführleitung 12 herausgeführt sein.

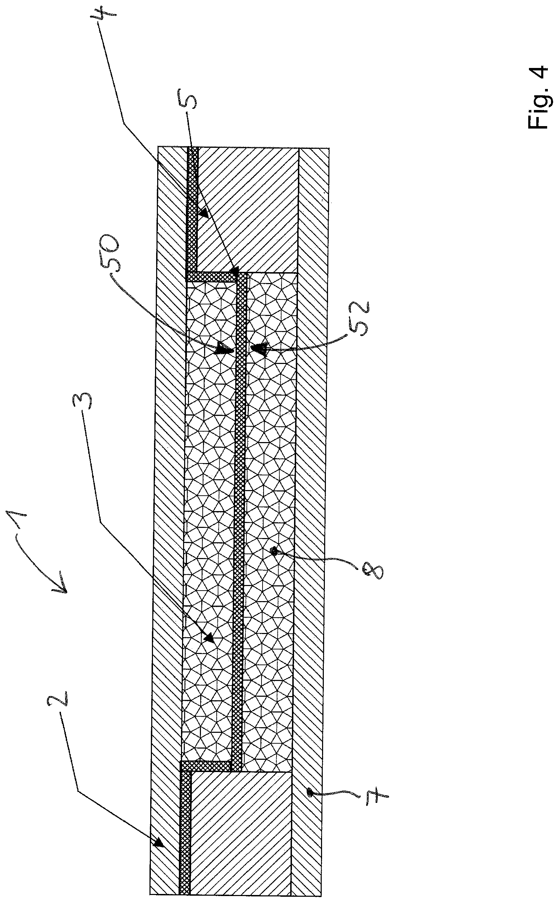

Bei der Brennstoffzelle gemäß Figur 1 und dem Brennstoffzellenstapel gemäß Figur 3 ist an den Grenzflächen zwischen der MEA 5 und den jeweiligen Rahmen 4, 6 jeweils eine Dichtung erforderlich. Dieser Aufwand für die erforderlichen Dichtungen kann durch die Ausgestaltung der Brennstoffzelle gemäß Figur 4 reduziert werden. Erkennbar ist, dass die MEA 5 am Randbereich der Stützstruktur 3, d.h. entlang einer seitlichen Grenzfläche dieser Stützstruktur 3, nach oben hin verläuft und dann wiederum seitlich (horizontal) entlang des Rahmens 4 und der oberen Deckplatte 2 geführt ist. Auf diese Weise kann ein separater Rahmen 6 für die weitere Stützstruktur 8 entfallen, sodass nur ein einziger durchgehender Rahmen 4 erforderlich ist. Hierdurch kann der Aufwand an abzudichtenden Verbindungen um 33 % reduziert werden.

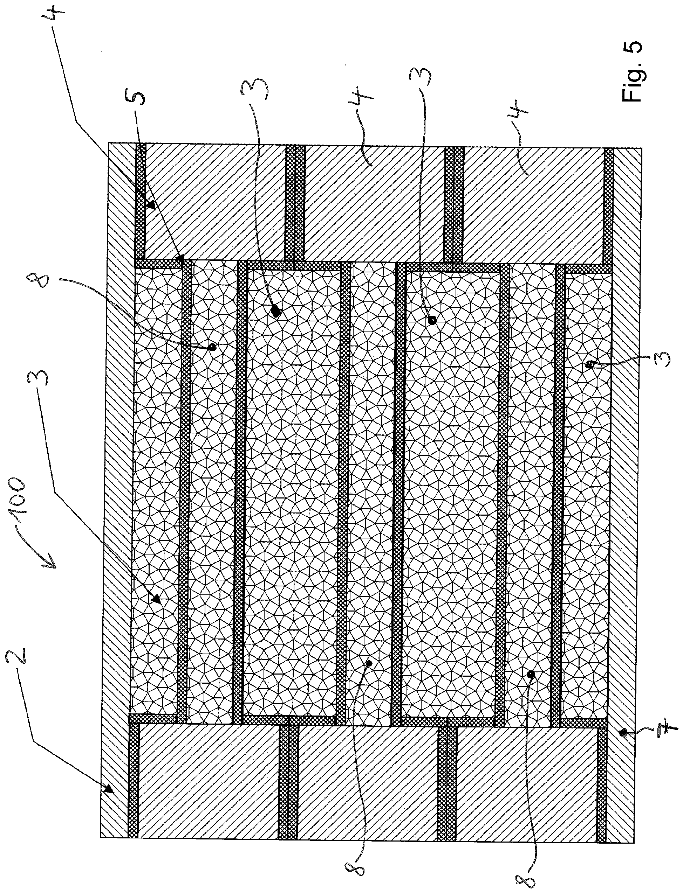

Die Figur 5 zeigt einen Brennstoffzellenstapel 100, der aus Brennstoffzellen gemäß Figur 4 in der gleichen Art wie der Brennstoffzellenstapel gemäß Figur 3 gebildet ist, d.h. mit einander jeweils zu weisenden Anodenseiten oder Kathodenseiten der benachbarten Brennstoffzellen (Janus-Prinzip). Auf diese Weise können die anhand der Figur 3 bereits erläuterten Vorteile mit den Vorteilen gemäß Figur 4 vorteilhaft kombiniert werden, d.h. es sind gegenüber der Ausführungsform der Figur 3 wiederum weniger Dichtungen erforderlich.

Das Verfahren zur Herstellung einer Brennstoffzelle der zuvor erläuterten Art beginnt mit dem Infiltrieren des offenporigen Metallschaums durch ein Infiltrationsmaterial. Dieses Infiltrationsmaterial kann zum Beispiel ein Werkstoff mit einer Schmelztemperatur deutlich unter 600°C oder ein chemisch lösliches Material sein. Das Lösungsmittel sollte dabei weder Nickel noch Yttrium stabilisiertes Zirkonoxid (YSZ) oder die Kathodenschicht, die aus gängigen SOFC-Kathodenmaterialien bestehen kann, angreifen. Die Oberfläche des mit dem Infiltrationsmaterial infiltrierten Metallschaums wird nun durch Schleifen und Polieren für eine Beschichtung vorbereitet, entfettet und in die Beschichtungsanlage eingebracht. Es können alle gängigen Verfahren zur Erzeugung der Anodenschicht aus der Gasphase genutzt werden, z.B. die Physikalische Gasphasenabscheidung mit Magnetronunterstützung. Der Beschichtungsprozess wird unter einer Argon-Sauerstoff-Atmosphäre durchgeführt. Dabei liegt die Zusammensetzung des Gasgemisches zwischen: 95 % Argon und 5 % Sauerstoff und 50 % Argon und 50 % Sauerstoff. Der Sauerstoffanteil kann zur Verbesserung der Abscheiderate zyklisch zwischen 0 % Sauerstoff und dem angestrebten Prozentsatz variiert werden. Als weiterer Zusatz zum Gasgemisch kann unter Umständen Krypton zur Stabilisierung des Beschichtungsprozesses hinzugegeben werden. Die zum Einsatz kommenden Beschichtungsmaterialien sind z.B.: Nickel, Zirkon, Yttrium und gegebenenfalls Platin oder andere Kathodenwerkstoffe. Neben der Nutzung von Zirkon und Yttrium kann auch YSZ als Beschichtungsmaterial zum Einsatz kommen. Dabei wird dann zur Beschichtung eine Argonatmosphäre ohne Sauerstoff genutzt. Die verwendeten Leistungen zur Verdampfung der Beschichtungsmaterialien sind so eingestellt, dass zwischen 5 % und 15 % Yttrium im Vergleich zum Zirkon verdampft wird.

Der Beschichtungsprozess gliedert sich zudem in drei Phasen. In der ersten Phasen wird neben Yttrium und Zirkon auch Nickel verdampft und auf das Substrat aufgebracht. Dabei liegt der Nickelanteil zwischen 25 % und 75 % in der entstehenden Schicht. Der Nickelanteil wird in diskreten Schritten oder kontinuierlich gesenkt bis kein Nickel mehr zugegeben wird. Bevorzugt passiert dies in den ersten 2,5 µm der Schicht. In der zweiten Prozessphase wird nur Yttrium und Zirkon abgeschieden. Die erzeugte Schichtdicke kann hier bis zum 500 µm betragen, bevorzugt liegt die Schichtdicke hier zwischen 5 µm und 30 µm. Werden herkömmliche Verfahren zur Kathodenschichterzeugung verwandt endet der Beschichtungsprozess hier. Bei der bevorzugten Prozessführung wird in der dritten Phase Platin mit verdampft. Dabei wird der Platinanteil in diskreten Schritten oder kontinuierlich bis zur gewünschten Schichtzusammensetzung mit einem Platinanteil zwischen 25 % und 75 % gesteigert.

Sowohl Kathode als auch Anode können zur Vergrößerung der Dreiphasengrenze porös ausgeführt sein. Dabei wird der Prozessdruck bei der Beschichtung (normal zwischen 0,2 Pa und 1,0 Pa) deutlich gesteigert.

Im Anschluss an die Beschichtung und die eventuelle Herstellung der Kathodenschicht wird das Infiltrat chemisch oder thermisch verflüssigt und aus dem Metallschaum entfernt. Der Metallschaum kann vor Prozessbeginn in eine entsprechende Rahmenstruktur integriert werden.

Der Aufbau der Brennstoffzelle besteht neben der oberen und unteren Deckplatte aus einem Metallschaum, vorzugsweise Nickel unter Umständen auch andere Materialien möglich, sowie der durch das Verfahren aufgebrachten und einseitig mit dem Metallschaum verbundenen MEA. Dies MEA besteht aus drei verschiedenen Schichten. Ausgehend von fest angebundenem Metallschaum folgt zunächst eine gemischte Schicht aus Anodenmaterial, in diesem Fall Nickel und YSZ. Die Anteile in dieser Schicht können dabei an der Oberfläche im Bereich von 25 % bis 75 % Nickel variieren. Die Schicht besitzt typischerweise, aber nicht zwingend, einen graduellen Aufbau bei abnehmenden Nickelanteil. Die Schichtdicke beträgt typischerweise weniger als 2,5 µm, kann aber auch dicker ausfallen. Auf diese Schicht folgt eine Elektrolytschicht bestehend aus YSZ. Auf diese wird eine gemischte Schicht aus Kathodenmaterial, hier Platin - andere Materialien möglich, und YSZ aufgebracht. Auch hier können die Platinanteile zwischen 5 % und 75 % variieren. Die dritte Schicht weist typischerweise einen graduellen Aufbau auf. Kathodenseitig wird die elektrische Verbindung durch einen weiteren Metallschaum realisiert, dieser kann dabei durch Fügeverfahren wie dem Löten mit der Zelle verbunden sein oder nur aufgelegt werden. Dieser Metallschaum wird von einem Rahmen umschlossen. Die gesamte Zelle ist gegen Undichtigkeit mit Dichtungen verschiedener Ausprägung abgedichtet. Die Gaszufuhr erfolgt z.B. durch Bohrungen im Rahmen.

## Patentansprüche

1. Verfahren zur Herstellung einer Festoxidbrennstoffzelle (1), die eine mechanische Stützstruktur (3) aus einem offenporigen Metallschaummaterial aufweist, mit folgenden Schritten:
a) Bereitstellen der mechanischen Stützstruktur (3) aus dem offenporigen Metallschaummaterial,
b) Erzeugen einer in das Metallschaummaterial nicht eindringenden und darauf gasdicht aufgebrachten Anodenschicht einer MEA (5) der Festoxidbrennstoffzelle (1),
c) Fertigstellen der MEA (5) mit einer Elektrolytmembran (51) und einer Kathodenschicht (52), wobei sich das Festoxidmaterial der Elektrolytmembran bis zur Grenzfläche, an der die Anodenschicht an die mechanische Stützstruktur angrenzt, in die Anodenschicht erstreckt,
wobei die mechanische Stützstruktur (3) vor dem Aufbringen der Anodenschicht (50) mit einem die Poren des offenporigen Metallschaummaterials der Stützstruktur (3) ausfüllenden, aushärtbaren Infiltrationsmaterial infiltriert wird, **dadurch gekennzeichnet, dass** die mit dem Infiltrationsmaterial infiltrierte Stützstruktur (3) nach dessen Aushärtung an einer Oberfläche, an der die Anodenschicht (50) aufzubringen ist, geglättet wird.

2. Verfahren nach Anspruch 1, **dadurch gekennzeichnet, dass** das Infiltrationsmaterial nach Fertigstellen der MEA (5) oder zumindest der Anodenschicht (50) aus der Stützstruktur (3) wieder entfernt wird.

3. Verfahren nach einem der Ansprüche 1 bis 2, **dadurch gekennzeichnet, dass** die Anodenschicht (50), die Elektrolytmembran (51) und/oder die Kathodenschicht (52) der MEA (5) mittels Gasphasenabscheidung hergestellt werden.

4. Verfahren nach einem der Ansprüche 1 bis 3, **dadurch gekennzeichnet, dass** die mechanische Stützstruktur (3) an gegenüberliegenden äußeren Oberflächenseiten mit jeweils einer separaten Anodenschicht (50) beschichtet wird.

## Claims

1. Process for producing a solid oxide fuel cell (1) which has a mechanical support structure (3) composed of an open-pored metal foam material, comprising the following steps:
a) provision of the mechanical support structure (3) composed of the open-pored metal foam material,
b) production of an anode layer of an MEA (5) of the solid oxide fuel cell (1), which anode layer does not penetrate into the metal foam material and has been applied in a gastight manner thereto,
c) finishing of the MEA (5) with an electrolyte membrane (51) and a cathode layer (52), where the solid oxide material of the electrolyte membrane extends into the anode layer as far as the interface at which the anode layer adjoins the mechanical support structure,
where the mechanical support structure (3) is infiltrated with a curable infiltration material which fills the pores of the open-pored metal foam material of the support structure (3) before application of the anode layer (50), **characterized in that** the support structure (3) infiltrated with the infiltration material is, after curing thereof, smoothed on a surface to which the anode layer (50) is to be applied.

2. Process according to Claim 1, **characterized in that** the infiltration material is removed again from the support structure (3) after finishing of the MEA (5) or at least the anode layer (50).

3. Process according to either of Claims 1 and 2, **characterized in that** the anode layer (50), the electrolyte membrane (51) and/or the cathode layer (52) of the MEA (5) are produced by means of vapour deposition.

4. Process according to any of Claims 1 to 3, **characterized in that** the mechanical support structure (3) is coated with a separate anode layer (50) on the opposite outer surface sides.

## Revendications

1. Procédé de production d'une pile à combustible à oxyde solide (1) qui comporte une structure de support mécanique (3) en matériau alvéolaire métallique à pores ouverts, ledit procédé comprenant les étapes suivantes :
a) produire la structure de support mécanique (3) à partir du matériau alvéolaire métallique à pores ouverts,
b) générer une couche anodique d'un MEA (ensemble membrane-électrode) (5) de la pile à combustible à oxyde solide (1), laquelle couche anodique ne pénètre pas dans le matériau alvéolaire métallique et est appliquée sur celui-ci de manière étanche aux gaz,
c) terminer le MEA (5) avec une membrane d'électrolyte (51) et une couche cathodique (52), le matériau d'oxyde solide de la membrane d'électrolyte s'étendant dans la couche anodique jusqu'à l'interface où la couche anodique est adjacente à la structure de support mécanique,
la structure de support mécanique (3) étant infiltrée avant l'application de la couche anodique (50) avec un matériau d'infiltration durcissable qui remplit les pores du matériau alvéolaire métallique à pores ouverts de la structure de support (3), **caractérisé en ce que** la structure de support (3) infiltrée avec le matériau d'infiltration est lissée après durcissement de celui-ci sur une surface sur laquelle la couche anodique (50) doit être appliquée.

2. Procédé selon la revendication 1, **caractérisé en ce que** le matériau d'infiltration est retiré de la structure de support (3) une fois que le MEA (5) ou au moins la couche anodique (50) est terminé(e).

3. Procédé selon l'une quelconque des revendications 1 et 2, **caractérisé en ce que** la couche anodique (50), la membrane électrolytique (51) et/ou la couche cathodique (52) du MEA (5) sont réalisées par dépôt en phase gazeuse.

4. Procédé selon l'une quelconque des revendications 1 à 3, **caractérisé en ce que** la structure de support mécanique (3) est revêtue d'une couche anodique séparée (50) sur chacun des côtés opposés de la surface extérieure.
